(19) Europäisches Patentamt
European Patent Office
Office européen des brevets

(11) **EP 3 002 455 B1**

(12) **EUROPÄISCHE PATENTSCHRIFT**

(45) Veröffentlichungstag und Bekanntmachung des Hinweises auf die Patenterteilung:
**01.03.2023   Patentblatt 2023/09**

(21) Anmeldenummer: **15188154.7**

(22) Anmeldetag: **02.10.2015**

(51) Internationale Patentklassifikation (IPC):
***F03D 17/00*** *(2016.01)*

(52) Gemeinsame Patentklassifikation (CPC):
**F03D 17/00;** F05B 2270/8041; Y02E 10/72

(54) **VERFAHREN ZUM BESTIMMEN VON BETRIEBSPARAMETERN EINER WINDKRAFTANLAGE**

METHOD FOR DETERMINING THE OPERATING PARAMETERS OF A WIND POWER PLANT

PROCEDE DE DETERMINATION DE PARAMETRES DE FONCTIONNEMENT D'UNE EOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2014   DE 102014014386**

(43) Veröffentlichungstag der Anmeldung:
**06.04.2016   Patentblatt 2016/14**

(73) Patentinhaber: **RWE Renewables GmbH**
**45141 Essen (DE)**

(72) Erfinder:
• **Heindl, Stefan**
**45147 Essen (DE)**
• **Haffke, Jan**
**31171 Nordstemmen (DE)**
• **Theobald, Dr.-Ing. Kirsten**
**41352 Korschenbroich (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 2 369 176          DE-A1-102008 031 484
DE-A1-102013 110 898     FR-A1- 2 882 404

EP 3 002 455 B1

**Beschreibung**

Der Gegenstand betrifft ein Verfahren zum Bestimmen von Betriebsparametern einer Windkraftanlage, bei dem im laufenden Betrieb der Windkraftanlage mittels optischer Verfahren die Betriebsparameter ermittelt werden können.

Betriebsparameter im Sinne des Gegenstands sind insbesondere auch solche Betriebsgrößen, die während eines laufenden Betriebs veränderlich sind. Die Einstellung von Betriebsparametern, insbesondere des Blattanstellwinkels, ist für den Betrieb einer Windkraftanlage (auch Windenergieanlage oder Windturbine genannt) von wesentlicher Bedeutung. Mittels des Blattanstellwinkels ist es möglich, die Anströmfläche für den Wind an den Rotorblättern der Anlage zu variieren. Der Blattanstellwinkel wird regelmäßig automatisch, motorisch an die aktuelle Windgeschwindigkeit angepasst, so dass die erzeugte elektrische Leistung an den jeweiligen Generator angepasst ist und/oder sich eine möglichst gleichmäßige Drehgeschwindigkeit des Rotors einstellt. Auch der Gierwinkel, d.h. die Ausrichtung der Windkraftanlage in den Wind, kann ein relevanter Betriebsparameter sein. Darüber hinaus können Bewegungen insbesondere Schwingungen des Turms, der Gondel oder auch des Spinners relevante Betriebsparameter sein.

Stimmen die Betriebsparameter nicht, kann es bei der Umwandlung von Windenergie in elektrische Energie zu Mindererträgen kommen. D.h., die Anlage erzeugt weniger elektrische Energie aus der Windenergie als dies bei optimaler Einstellung möglich wäre. Bei Fehleinstellungen, insbesondere bei einem falschen Gierwinkel oder bei einem falschen Blattanstellwinkel zumindest eines Rotorblatts kann es zu erhöhten dynamischen Belastungen der Bauteile der Windkraftanlage kommen. Insbesondere die Rotorblätter, der Turm, die Gondel, der Antriebsstrang als auch Fundamente werden bei fehlerhafter Einstellung einer hohen dynamischen Belastung ausgesetzt. Dies führt zu Schäden und insbesondere einer verkürzten Lebensdauer der Windkraftanlage. Im Beispiel des Blattanstellwinkels ist von besonderer Bedeutung, dass dieser möglichst an allen Rotorblättern, in der Regel zwischen zwei und vier Rotorblättern an einer Anlage, insbesondere im Betrieb, also unter Windlast, gleich, zumindest jedoch mit einer geringen Toleranz gleich ist. Sind die Blattanstellwinkel der verschiedenen Rotorblätter unterschiedlich voneinander, ist die Windlast pro Rotorblatt unterschiedlich und es kann zu Unwuchten im Rotor und im Antriebsstrang kommen. Das Einstellen des Blattanstellwinkels kann für jedes Rotorblatt getrennt erfolgen, oder die Rotorblätter werden mit gleichen Einstellungen des Blattanstellwinkels betrieben. Der Einstellparameter für den Blattanstellwinkel bedeutet aber in beiden Fällen nicht, dass das Rotorblatt unter Windlast auch tatsächlich diesen Winkel hat.

Auch Unwuchten können zu Bewegungen der Windkraftanlage führen, welche ebenfalls zum einen einen Minderertrag und zum anderen einen erhöhten Verschleiß bedeuten. Wenn nachfolgend von Schwingung die Rede ist, ist damit vorzugsweise nicht nur eine harmonische Schwingung gemeint, sondern eine jede Bewegung.

Darüber hinaus ist damit zu rechnen, dass bei fehlerhaften Einstellungen die Lärmemission einer solchen Windkraftanlage erhöht ist. Dies ist insbesondere vor dem Hintergrund relevant, als dass solche Anlagen vermehrt in der Nähe von Wohngebieten aufgestellt werden.

Aktuell ist es möglich, die Blattanstellwinkel mittels Sensoren innerhalb der Windkraftanlagen zu messen. Dies ist jedoch insofern problematisch, als dass nur bei einer korrekten Kalibrierung der Sensoren diese auch den tatsächlichen Anstellwinkel erfassen und ausgeben. Ansonsten ist es auch möglich, die Blattanstellwinkel zu messen. Dies wird jedoch heutzutage lediglich bei stehenden Windkraftanlagen durchgeführt. Dies hat zum einen den Nachteil, dass die Überwachung der Blattanstellwinkel zu einem Produktionsausfall der Windkraftanlagen führt. Auf der anderen Seite ist für die oben genannten Probleme nicht der Blattanstellwinkel im Ruhezustand relevant, sondern im Betrieb der Windkraftanlage. Insbesondere verändert sich die Blattgeometrie abhängig von Windgeschwindigkeit und Drehzahl. Im Stillstand hat ein Rotorblatt einer Windkraftanlage mit großer Wahrscheinlichkeit eine andere Geometrie als im Betrieb. Hier kommen insbesondere Durchbiegungen und Verwindungen des Rotorblatts ins Spiel, welche im Ruhezustand der Anlage keine Rolle spielen.

Aus der DE 10 2013 110 898 A1 ist ein Verfahren bekannt, dass thermische Signaturen von Rotorblättern nutzt, um den Zustand der Windkraftanlage zu bestimmen.

Die EP 2 369 176 A1 und die DE 10 2008 031484 A1 beschreiben ein Verfahren zum Bestimmen eines Pitch Winkels eines Windkraftanlage.

Die FR 2 882 404 beschreibt ein Verfahren zum Vermessen eines Rotorblatts einer Windkraftanlage.

Aus der deutschen Patentanmeldung DE 10 2008 053 928 A1 ist die Überwachung einer Windkraftanlage im Stillstand mittels Flugdrohnen bekannt. Flugdrohnen ermöglichen es, eine optische Inspektion der Windkraftanlage in einem geringen Abstand zu den Rotorblättern durchzuführen.

Diese Erfassung ist jedoch höchst aufwendig und aufgrund der Eigenbewegung der Drohnen kann es zu Fehlmessungen kommen.

Aus diesem Grunde lag dem Gegenstand die Aufgabe zugrunde, ein Verfahren zur Bestimmung von Betriebsparametern einer Windkraftanlage zur Verfügung zu stellen, welche im Betrieb verlässliche Daten zu den Betriebsparametern liefert.

Diese Aufgabe wird gegenständlich durch ein Verfahren nach Anspruch 1 gelöst.

Es ist erkannt worden, dass mittels fotografischer und/oder videografischer Analyse der Windkraftanlage Betriebsparameter im Betrieb erfasst werden können. Ferner ist erkannt worden, dass eine bodenbasierte Erfassung zu durchaus zufriedenstellenden Messergebnissen führt. Insbesondere kann die Bilderfassung frei von Eigenschwingungen der Erfassungsmittel erfolgen. Die Bilderfassung kann aber auch z.B. aus der Hand möglich sein und mit Eigenschwingung behaftet sein. Die Erfassungsmittel können mobil und/oder stationär (ortsfest) sein. Die Erfassungsmittel können eine Videokamera sein.

Mit Hilfe des gegenständlichen Verfahrens ist es möglich, den Blattanstellwinkel zumindest eines der Rotorblätter besonders verlässlich zu erfassen. Dabei ist bevorzugt, dass die Aufnahme der Bilder ungefähr parallel zur Turmachse durchgeführt wird. Es wird vorgeschlagen, dass die optische Achse der Bilderfassung in etwa parallel oder in einem spitzen Winkel zu einer Turmachse der Windkraftanlage verläuft. Hierdurch ist eine bodenbasierte Erfassung der Rotorblätter möglich. Ferner werden die Rotorblätter, insbesondere sowohl während eines Nulldurchgangs, insbesondere wenn die Längsachse des Rotorblatts annähernd parallel zur Turmachse verläuft und diese zum Turm bzw. Boden zeigen, als auch während einer Horizontalstellung, insbesondere wenn die Längsachse des Rotorblatts um in etwa 90° zur Turmachse verschwenkt sind erfasst. Insbesondere werden die Rotorblätter in der Horizontalstellung erfasst, die unmittelbar auf den Nulldurchgang folgt.

Beide Erfassungen sind durch die Einstellung der optischen Achse parallel oder in einem spitzen Winkel zur Turmachse möglich. Dabei wird in einer Sequenz von erfassten Bildern jeweils ein gleicher Bildausschnitt (ggf. auch jeweils das gesamte Bild) betrachtet. In dieser Sequenz an Bildern sind im Bildausschnitt die Rotorblätter in zwei verschiedenen Positionen (zu zwei verschiedenen Zeiten), nämlich im Nulldurchgang und in der Horizontalposition erfasst. Auch kann im selben Bildausschnitt die Gondel als auch der Spinner erfasst werden. Durch das Erfassen dieser für die Messung relevanten Informationen über den Spinner und die Rotorblätter, kann ein Blattanstellwinkel zumindest eines der Rotorblätter im Betrieb, also während die Turbine rotiert, besonders messgenau erfasst werden.

Insbesondere haben die Erfinder herausgefunden, dass sich der Blattanstellwinkel in der Horizontalposition des Rotorblatts besonders gut messen lässt. Diese Winkelposition lässt sich besonders dann gut erfassen, wenn die optische Achse der Bilderfassung im Wesentlichen parallel oder in einem spitzen Winkel zur Turmachse verläuft. Die Aufnahme von unten ermöglicht es, zumindest eines Rotorblatts im Betrieb zu vermessen, wobei betriebsbedingte Durchbiegungen und Verdrehungen des Rotorblatts berücksichtigt sind. Durch die bodenbasierte Messung ist sichergestellt, dass die Aufnahmevorrichtung keiner bzw. einer vernachlässigbaren Eigenschwingung unterliegt. Außerdem ist ein Ersteigen der Windkraftanlage nicht notwendig. Darüber hinaus ist die Messung während des Betriebs möglich, so dass Produktionsausfälle vermieden sind. Darüber hinaus ist die Messtechnik, insbesondere die videografische Erfassung für eine Mehrzahl von Windkraftanlagen einsetzbar und an oder in der Windkraftanlage selbst ist keine zusätzliche Messtechnik notwendig.

Insbesondere werden die Bilder videografisch vom Boden aus erfasst. Anschließend werden die Bilder einer Bildbearbeitung unterzogen, bei der in zeitlicher Abfolge jeweils einzelne, für die Bestimmung des Betriebsparameters relevante Bilder bzw. Bildausschnitte detektiert und anschließend ausgewertet werden.

Zunächst ist es notwendig, die Schwingung des Turmes der Windkraftanlage aus der Auswertung heraus zu nehmen. Hierzu ist es notwendig, zunächst die Schwingung des Turmes zu detektieren. Aus diesem Grunde wird vorgeschlagen, dass im Sichtfeld der Bilderfassung zumindest Teile einer Gondel und oder eines Spinners der Windkraftanlage und zumindest Teile zumindest eines Rotorblatts der Windkraftanlage erfasst werden. Im Bereich des Sichtfeldes der Bilderfassung ist dabei vorzugsweise ein Kennpunkt der Windkraftanlage, z.B. des Spinners oder der Gondel zu identifizieren, dessen Position im Bild unabhängig von der Drehbewegung, insbesondere in einem starren Abstand zum Rotor ist. Bei einem Spinner mit "platter Nase" könnten z.B. dies die beiden Eckpunkte sein. Insbesondere kann eine Spinnerspitze des Spinners als Kennpunkt erfasst. Die Spinnerspitze ist ein gut geeigneter Kennpunkt, um die Schwingung des Turms der Windkraftanlage ermitteln zu können. Ruht die Bilderfassung relativ zu dem Turm und der Windkraftanlage ortsfest, so bewegt sich der Kennpunkt abhängig von der Schwingung des Turmes. Mit der Auswertung der Position des Kennpunktes in einer zeitlichen Bildfolge, kann die Schwingung des Turmes und/oder der Gondel der Windkraftanlage festgestellt werden.

Um die Schwingung festzustellen, wird vorgeschlagen, dass Bewegtbilder der Windkraftanlage erfasst werden. Diese Bewegtbilder repräsentieren die Windkraftanlage zu verschiedenen Zeitpunkten. Durch Auswertung der Einzelbilder ist es möglich, die zu den jeweiligen Zeitpunkten unterschiedlichen Bedingungen der Windkraftanlage, insbesondere des Kennpunkts, des Spinners, der Spinnerspitze, der Gondel und/oder des Rotorblatts auszuwerten.

Um die aufgenommenen Bilder zu normalisieren, d.h. die durch die mechanische Belastung der Windkraftanlage bedingten Bewegungen des Turms und/oder des Spinners und/oder der Gondel für die weitere Auswertung auszublenden, wird in einem Bild zunächst ein initialer Kennpunkt bestimmt. Dieser initiale Kennpunkt ist ein Punkt des Bildes, der ein Teil der Windkraftanlage repräsentiert. Dieser Teil der Windkraftanlage ist vorzugsweise in jedem der Einzelbilder der Sequenz der aufgenommenen Bilder, die für die Auswertung verwendet werden, zu erkennen. Dieser Kennpunkt ist insbesondere ein Punkt in den Bildern, dessen Position unabhängig von der eigentlichen Rotation der Rotorblätter ist, insbesondere dessen Position starr zur Rotationsachse ist. Dies kann insbesondere die Spinnerspitze sein. Da zunächst lediglich die Schwingung des Turms der Windkraftanlage eliminiert werden soll, ist der initiale Kennpunkt insbesondere ein Bildpunkt der Windkraftanlage, dessen Bildposition sich durch die Rotation der Rotorblätter zwischen den Einzelbildern nicht verändert. Die Rotorblätter verändern laufend ihre Position, so dass anhand dieser die Schwingung des Turms nicht festgestellt werden kann. Dahingegen sind insbesondere die Gondel und insbesondere der Spinner als auch die Spinnerspitze bei der Rotation der Rotorblätter in ihrer Position durch die Rotation nicht beeinflusst. An diesen Bauteilen wird vorzugsweise der Kennpunkt hin bestimmt. Lediglich ein Schwingen des Turmes führt zu einer Veränderung der Position der Gondel, des Spinners und der Spinnerspitze. Der initiale Kennpunkt kann vorzugsweise manuell in einem Einzelbild bestimmt werden.

Bei einer Tageslichtaufnahme vom Boden aus entlang der Turmachse erscheinen in der Regel die Gondel, der Spinner und die Rotorblätter in einem sehr hohen Kontrast gegenüber dem Himmel. Diese Eigenschaft kann ausgenutzt werden, indem eine Kantenerkennung in zumindest einem Bild der erfassten Bilder durchgeführt wird. Diese Kantenerkennung ist dann besonders einfach, wenn der Kontrast zwischen Windkraftanlage und Himmel sehr hoch ist. Mit Hilfe der Kantenerkennung kann die äußere Kontur der Rotorblätter als auch des Spinners und der Gondel erfasst werden. Eine Kantenerkennung kann z.B., mit einem Sobel edge detector durchgeführt werden. Auch kann das Frequenzspektrum der Bilder verwendet werden. Im Frequenzspektrum kann ein Bereich hoher Frequenz eine Kontraständerung, mithin eine Kante darstellen. Durch eine geeignete Hochpassfilterung können die Bereiche und Pixel identifiziert werden, die Kanten darstellen können. Diese können im Ortsbereich wiederum farblich (oder grau) abgesetzt dargestellt werden.

Bei der Kantenerkennung ist regelmäßig eine Veränderung der Pixelwerte zu einem Hintergrund relevant. Um bei verschiedenen Lichtbedingungen stets eine gute Kantenerkennung zu ermöglichen, wird vorgeschlagen, dass ein Referenzwert eines Hintergrundparameters bestimmt wird. Dabei ist es möglich, den Hintergrundparameter aus eine Kontrastwert, einem Farbwert, einem Grauwert, einen Wert eines Farbkanals oder dergleichen insbesondere manuell zu selektieren.

Basierend auf der Selektion des Hintergrundparameters wird anschließen ein Referenzwert hierfür bestimmt. Hierzu kann in zumindest einem Bild ein Hintergrundbereich ausgewählt werden. Ein Hintergrundbereich ist in der Regel ein Bereich, in dem vorzugsweise ausschließlich der Hintergrund zu erkennen ist und nicht der Spinner oder andere Teile der Turbine. Dieser Bereich kann insbesondere durch den Nutzer in zumindest einem Bild bestimmt werden.

Nachdem der Bereich bestimmt wurde, kann der Referenzwert des Hintergrundparameters berechnet werden. Hierbei kann z.B. ein Mittelwert aller Pixelwerte in dem ausgewählten Bereich für den ausgewählten Hintergrundparameter berechnet werden. Dieser Wert kann dann als Referenzwert verwendet werden.

Anschließend kann dann die Kantenerkennung durchgeführt werden. Hierzu kann ein weiterer Bildbereich, insbesondere manuell bestimmt werden. In diesem Bildbereich ist insbesondere der Spinner und vorzugsweise weitere Teile der Turbine zu sehen. In diesem Bildbereich ist vorzugsweise auch der initiale Kennpunkt vorhanden. Mit Hilfe des Referenzwertes kann eine Abweichung eines Pixelwertes bestimmt werden. Insbesondere kann eine Abweichung gegenüber einem Hintergrundpixel erkannt werden. Mit Hilfe der Referenzwerte kann die Kante des Spinners erkannt werden.

An einer erkannten Kante wird ein Kurvenverlauf approximiert. Insbesondere kann eine Kurve zweiter oder dritter Ordnung an den Kanten approximiert werden. Vorzugsweise kann eine Parabel oder ein sonstiger Kegelschnitt an der erkannten Kante approximiert werden. Hierzu werden die Bildpunkte bestimmt, die mit der höchsten Wahrscheinlichkeit die Kante darstellen. Überschreitet z.B. ein Bildpunkt (Pixel) im Frequenzbereich einen Grenzwert, kann dieser Pixel einer Kante zugeordnet werden. Alle aneinander angrenzenden Pixel mit einem Frequenzwert über dem Grenzwert können als eine Kante bewertet werden.

Bei der Approximation können z.B. Kurvenparameter, insbesondere Parabelparameter bestimmt werden. Vorzugsweise verändert sich die Kurve, insbesondere hinsichtlich ihrer Parameter zwischen den Bildern nicht. Es kann aber auch vorkommen, dass sich die Form der Kante zwischen den Bildern verändert. Dies kann z.B. durch mechanische Belastungen und Stauchungen passieren. Es kann auch möglich sein, für mehrere, insbesondere alle Einzelbilder getrennt Kurvenparameter zu bestimmten. Eine Veränderung der Kurvenparameter kann dazu verwendet werden, die mechanische Belastung des Spinners und/oder der Gondel als Betriebsparameter auszuwerten. Vorzugsweise kann aber auch ein Satz an Kurvenparametern in einem Bild bestimmt werden und für weitere, vorzugsweise alle Bilder verwendet werden. Vorzugsweise verändert sich die Form einer erkannten Kante nicht, sondern es verschiebt sich lediglich die Position der Kante innerhalb des Bildes.

Vorzugsweise sind die Pixel entlang einer Kante räumlich benachbart angeordnet. Auch können den Pixeln abhängig von Ihrer Ortsfrequenz Helligkeitswerte zugeordnet werden. Auch kann z.B. ein Helligkeitswert eines Bildpunktes nach der Kantenerkennung bestimmt werden. Ausgehend von beispielsweise einem Bildpunkt können benachbarte Bildpunkte hinsichtlich ihres Helligkeitswertes ausgewertet werden und anhand der Helligkeitsverteilung kann bestimmt werden, an welcher Stelle mit höchster Wahrscheinlichkeit die Kante verläuft. Die erkannten Bildpunkte werden verwendet, um den Verlauf der Kante zu approximieren. D.h., dass der Kurvenverlauf so berechnet wird, dass er den in dem Bild tatsächlich erkannten Kanten angenähert ist.

Bei der Kantenerkennung wird das Bild vorzugsweise in Graustufen dargestellt und die Kanten, insbesondere hochfrequente Anteile innerhalb des Bildes, werden heller dargestellt, als Bereiche, in denen keine Kanten erkannt werden.

Bei der Kantenerkennung kann auch ein Referenzverlauf zumindest einer bekannten Kante verwendet werden. Hierbei ist es möglich, Referenzverläufe von Spinnerkanten bekannter Turbinen in einer Datenbank abzuspeichern. Insbesondere können solche Referenzverläufe für bestimmte Typen von Windturbinen abgespeichert werden. Die Referenzverläufe lassen sich aus Bildern von Referenzturbinen berechnen. Diese Bilder können z.B. unmittelbar nach einer Installation der Turbine erfasst werden. Auch können die Bilder bei sehr guten Lichtverhältnissen erfasst werden. Auch ist es möglich, die Referenzverläufe aus den Konstruktionsdaten einer Windturbine abzuleiten. Die Referenzverläufe können in einer Datenbank gespeichert werden.

Die im Bild zunächst detektierte Kante wird beispielsweise mit zumindest zwei Referenzverläufen aus einer Datenbank verglichen werden. Derjenige Referenzverlauf, der mit der detektierten Kante die größte Ähnlichkeit hat, beispielsweise die geringste Abweichung (z.B.in Summe) der Pixel in ihrer Position voneinander, kann als Kante der aktuellen Turbine abgespeichert werden.

Die Verwendung von Referenzverläufen hilft insbesondere bei der Kantenerkennung, wenn die Lichtverhältnisse bei den aufgenommenen Bildern nicht optimal sind. Insbesondere bei Abschattungen von Teilen des Spinners kann die Kante durch Extrapolation zusammen mit dem Referenzverlauf approximiert werden. Insbesondere kann in der Sequenz aus Bildern für diejenigen Bilder bei denen die Kante durch diverse Störungen nicht sicher erkannt werden kann, durch den Referenzverlauf approximiert werden.

Bei Abweichungen von dem Referenzverlauf durch die erkannte Kante kann z.B., auch ein örtlicher Gradient der Abweichung festgestellt werden. Ist die Abweichung eher abrupt, also mit einem großen Gradienten, kann auch ein Hinweis ausgegeben werden. Dieser Hinweis kann z.B. zur Erkennung von Dellen, Beulen oder sonstiger Schäden am Spinner genutzt werden.

Auch kann die Kurve der erkannten Kante anhand einer Gleichung n-ten Grades approximiert werden. Dabei ist es möglich, dass eine Auswahl an Parametern der Gleichung n-ten Grades iteriert wird, und die Gleichung gewählt wird, welche am besten zu der erkannten Kante passt. Kann, Insbesondere kann eine Gleichung 4. Grades oder auch 2. Grades verwendet werden. Dem Nutzer kann die Auswahlmöglichkeit angeboten werden, welche Gleichung, bzw. welche Grad verwendet werden soll.

Sobald die Kurve der erkannten Kante approximiert wurde, wird die Information zu der Kurve in einem Speicher abgelegt. Dies kann entweder die Information zu dem Referenzverlauf oder die Information zu der Gleichung sein, mit der die Kante approximiert wurde.

Nachdem die Kurve durch die erkannte Kante approximiert wurde, wird in der approximierten Kurve der Kennpunkt bestimmt. D.h., dass der Punkt der Kurve, welcher am nächsten zum initialen Kennpunkt liegt, als Kennpunkt bestimmt wird. Somit wird eine manuelle Bestimmung des initialen Kennpunkts dadurch optimiert, dass dieser anschließend durch die Approximation der Kurve durch die Kante zu einem approximierten Kennpunkt verschoben wird. Dabei kann z.B. ein lokales oder absolutes Maximum oder Minimum der approximierten Kurve bestimmt werden und an diesen Punkt kann der initiale Kennpunkt verschoben werden. Der initiale Kennpunkt kann dann ein berechneter Kennpunkt sein. Der manuell bestimmte Kennpunkt kann dafür verwendet werden, zunächst die Kante zu identifizieren, deren Verlauf anschließend approximiert werden soll.

Es ist möglich, dass der Kennpunkt in einen Nullpunkt der approximierten Kurve verschoben wird. Der Nullpunkt der Kurve repräsentiert in der Regel die Spitze des Spinners. Insbesondere bei einer Parabel kann der Parabelverlauf dem Verlauf des Spinners entsprechen und der Nullpunkt der Parabel entspricht der Spinnerspitze. Der Nullpunkt der Kurve lässt sich berechnen.

Der initiale Kennpunkt kann entweder der manuell festgelegte oder der durch die Approximation der Kurve verschobene Kennpunkt (dieser Kennpunkt kann anschließend als initialer Kennpunkt betrachtet werden) sein. Der initiale Kennpunkt wird zunächst in einem ersten Bild einer Sequenz von Bildern bestimmt, welche für die nachfolgende Auswertung verwendet werden. Insbesondere wird ein erstes Bild bestimmt, ausgehend von dem die zeitlich nachfolgenden Bilder für die Bestimmung des Betriebsparameters bestimmt werden sollen.

Anschließend kann für jedes Einzelbild, ausgehend von dem ersten Bild, die Kantenerkennung als auch die Kurvenapproximation durchgeführt werden. In zeitlich aufeinanderfolgenden, vorzugsweise allen zeitlich aufeinanderfolgenden Bilder einer Sequenz kann ein Kennpunkt bestimmt werden. Dieser jeweilige Kennpunkt eines Bildes wird jeweils mit dem initialen Kennpunkt des ersten Bildes hinsichtlich seiner räumlichen Position innerhalb des Bildes, insbesondere seiner X- und Y-Koordinaten innerhalb des Bildes betrachtet. Eine Verschiebung der Position des Kennpunkts vom initialen Kennpunkt bedeutet ein Schwingen eines Turmes und/oder der Gondel. Die Abweichung der Position des Kennpunkts von der Position des initialen Kennpunkt wird vorzugsweise für jedes Bild einer Sequenz ermittelt. Diese Abweichung der Position des Kennpunkts eines Bildes von der Position des initialen Kennpunkts repräsentiert die Auslenkung des Turmes und/oder der Gondel relativ zur Position des Turmes und/oder der Gondel zum Zeitpunkt des Bildes des initialen Kennpunkts.

Bei der Auswertung der Einzelbilder kann es sinnvoll sein, zunächst für jedes der Einzelbilder die Position und Ausrichtung der Kante zu ermitteln. Hierbei kann zunächst auf die zuvor abgespeicherte approximierte Kurve zurückgegriffen werden.

Mit Hilfe der Positionserkennung des Kennpunkt in der Sequenz der Bilder kann z.B. eine Translation und/oder eine Rotation des Spinners detektiert werden. Ist eine Translation erkennt, kann z.B. eine Schwingungsanalyse durch Frequenzanalyse durchgeführt werden. Auch kann durch eine Analyse der Bewegung des Kennpunktes eine Aussage zu eventuellen Rotorunwuchten der Turbine getroffen werden.

Mit Hilfe der Ermittlung der räumlichen Abweichung der Kennpunkte kann der Betriebsparameter der Bewegung des Turmes zum Messzeitpunkt bestimmt werden. Die Verschiebung der Kennpunkte kann in einem Diagramm aufgetragen werden und erlaubt Rückschlüsse auf das Schwingungsverhalten der Windkraftanlage, insbesondere des Turmes.

Bei der Erkennung der Position des Kennpunktes und der anschließenden Auswertung der Bewegung des Punktes ist es notwendig, zwischen einer Translation und einer Rotation zu unterscheiden.

In einem ersten Verfahren kann für jedes Bild, wie oben beschrieben, eine Kante durch mathematische Angleichung an eine Kurve 2. oder 4. Grades angepasst werden. Es ist erkannt worden, dass ein Vergleich der erkannten Kurve mit einer Kurve gleichen Grades mit nur geraden Koeffizienten für eine Auswertung der Translation und der Rotation möglich ist. Insbesondere kann davon ausgegangen werden, dass eine Kurve von einem Polynom mit nur geraden Koeffizienten achssymmetrisch ist. Unter der Annahme, dass ein Spinner konstruktiv auch achssymmetrisch ist, kann daraus geschlossen werden, wenn die approximierte Kurve nur gerade Koeffizienten hat, dass lediglich eine Translation vorliegt. Voraussetzung hierfür ist natürlich stets, dass das Bezugssystem, also die Bildachsen, zwischen den Bildern nicht verschoben werden. Auch ist es sinnvoll, wenn eine vorzugsweise vertikale Bildachse zumindest parallel, vorzugsweise durch die Symmetrieachse des Spinners verläuft. Jede Abweichung der erkannten Kante von einem Polynom mit nur gerade Koeffizienten kann als Rotation gewertet werden.

Auch kann die Symmetrieachse der erkannten Kurve bestimmt werden. Hierbei kann zunächst die ursprüngliche Kurve mit der aktuell erkannten Kurve verglichen werden. Unter der Annahme, dass die Kante des Spinners sich in ihrer Form nicht verändert, kann ausgehend von der ursprünglichen Kurve die Neigung der Symmetrieachse der aktuellen Kurve bestimmt werden.

Auch kann die Neigung der Kurve, also insbesondere die Neigung zur y-Achse, durch Auswertung der aktuellen Kurve bestimmt werden. Zunächst können beidseitig des Kennpunktes, welcher insbesondere den Scheitelpunkt der Kurve darstellt, entlang der Kurve zwei Punkte mit einem gleichen Abstand entlang der Kurve von dem Kennpunkt bestimmt werden. Wenn diese Punkte parallel zu der horizontalen Bildachse liegen, liegt nur eine Translation vor. Sind die Punkte jedoch nicht parallel zur Bildachse, kann auf eine Rotation geschlossen werden. Die Rotation ist abhängig von dem Wegintegral zwischen den jeweiligen Punkten und einem Schnitt durch die Kurve parallel zur horizontalen Bildachse, also z.B. den Weg in Pixeln, der von jedem Punkt entlang der Kurve zurückgelegt werden muss, so dass die verschobenen Punkte im Bild auf gleicher Höhe sind, also eine gleiche y-Koordinate haben.

Anschließend kann für eine weitere Auswertung der Bilder eine Kompensation der detektierten Bewegung durchgeführt werden. Hierzu werden alle Pixel eines Einzelbilds, vorzugsweise jedes Einzelbilds einer Sequenz abhängig von der bestimmten Abweichung der Position des Kennpunktes von der Position des initialens Kennpunkt verschoben. Insbesondere erfolgt die Verschiebung der Pixel exakt entgegen der ermittelten Positionsabweichung des Kennpunktes von dem initialen Kennpunkt. Beispielsweise ist in einem Bild ermittelt worden, dass sich die Spinnerspitze um zehn Bildpunkte nach rechts und fünf Bildpunkte nach oben innerhalb des Bildes verschoben hat. Zur Kompensation wird das Bild bzw. die Pixel des Bildes um zehn Bildpunkte nach links und fünf Bildpunkte nach unten verschoben. Dann liegt der Kennpunkt dieses Einzelbildes unmittelbar auf dem initialen Kennpunkt. Wird dies für jedes Einzelbild durchgeführt, so ist die resultierende Sequenz von Einzelbildern unabhängig von der detektierten Schwingung. Der Kennpunkt liegt in jedem Einzelbild an der gleichen räumlichen Position innerhalb des Bildes.

Bei der Kompensation kann auch die Rotation kompensiert werden. Dabei wird dann das gesamte Bild entgegen der erkannten Rotation des Spinners rotiert.

Anschließend ist es beispielsweise möglich, die Periode der Rotation und/oder die Drehzahl des Windrades zu ermitteln. Hierzu ist es beispielsweise möglich, den Nulldurchgang jedes einzelnen Rotorblatts zu bestimmen. Auch hierzu kann eine grafische Auswertung durchgeführt werden. Insbesondere ist es möglich, in einem bestimmten Bildausschnitt einen Mittelwert der darin enthaltenen Pixel, z.B. einen Mittelwert der Farbwerte der Pixel, insbesondere einen Mittelwert der Grauwerte der Pixel auszuwerten. Zur Bestimmung eines Nulldurchgangs kann beispielsweise derjenige Bildausschnitt definiert werden, der den Bereich unmittelbar unterhalb der Gondel einschließt. Die optische Achse verläuft von dem Aufnahmemittel entlang des Turmes zu der Gondel. Zum Zeitpunkt eines Nulldurchgangs quert ein Rotorblatt diese optische Achse. Insbesondere ist das Rotorblatt im Nulldurchgang im Wesentlichen parallel zur Turmachse und zeigt Richtung Boden.

Es versteht sich, dass es nicht immer möglich ist, ein Einzelbild zu bestimmen, in dem ein Rotorblatt exakt im Nulldurchgang ist. Vielmehr ist es Ziel, dasjenige Einzelbild zu bestimmen, in dem das Rotorblatt möglichst nahe an dem Nulldurchgang ist. Hierzu wird der Bildausschnitt hinsichtlich eines Mittelwertes der im Bildausschnitt enthaltenen Pixel, z.B. eines Mittelwertes der Grauwerte, eines Mittelwertes von Farbwerden oder dergleichen, ausgewertet. Wenn der Bildausschnitt unterhalb der Gondel gewählt wurde, verändert sich dessen Mittelwert stets dann, wenn ein Rotorblatt in diesem Bereich liegt und dabei die optische Achse quert. Durch Bestimmung desjenigen Bildes, dessen Mittelwert einen Grenzwert unter- oder überschreitet, kann ein Blattdurchgangsbild bestimmt werden. Auch ist es möglich, die Mittelwerte der Bildausschnitte der Einzelbilder miteinander zu vergleichen. Diejenigen Bilder, in denen die Mittelwerte ein zumindest lokales Maximum erreichen, werden als Blattdurchgangsbilder bestimmt.

Wie bereits erwähnt, liegt der Bildausschnitt in dem Bildbereich der die Gondel von unten zeigt. Insbesondere kann der Bildausschnitt in einem Bereich zwischen dem Spinner und dem Turm der Windkraftanlage bestimmt sein.

Ein Nulldurchgang eines Blattes kann auch durch Auswertung der Position der Spitzen der weiteren Blätter erkannt werden. Bei eine Aufnahme, in der nicht nur der Spinner, sondern auch die Rotorblätter erkannt werden können, ist eine Auswertung der Position der Blätter möglich, Insbesondere kann z.B. detektiert werden, in welchen Bildern jeweils zwei Blätterspitzen einen gleichen oder zumindest ähnlichen Abstand zur Rotorwurzel, insbesondere zur Symmetrieachse des Spinners haben. Ist ein Blatt beispielsweise in einer Position senkrecht nach oben, weisen die beiden anderen Blätter jeweils 60° nach außen. In diesem Fall haben die Blätterspitzen einen gleichen Abstand zur Spinnerspitze. Es kann nach dem Bild gesucht werden, in dem der Unterschied in den Abständen zwischen jeweils eine Blattspitze und der Spinnerspitze minimal ist. Dieses Bild kann für jeden Durchgang bestimmt werden.

Der Vorteil dieser Erkennung des Nulldurchgangs kann darin liegen, dass im Nulldurchgang ein Blatt nach oben zeigt und die anderen beiden nach außen, so dass die Spinnerspitze durch kein Blatt verdeckt sein kann.

Eine Windkraftanlage hat in der Regel mehr als ein Rotorblatt, so dass bei einer vollständigen Umdrehung mehrere Nulldurchgänge festgestellt werden. Die Anzahl der Rotorblätter einer Windkraftanlage ist bekannt. Wird die Zeit und/oder die Anzahl der Bilder bestimmt, die zwischen jeweils zwei Blattdurchgangsbildern liegen und ist die Anzahl der Rotorblätter bekannt, so kann die Periode der Rotation der Windkraftanlage bestimmt werden. Insbesondere kann jedem Bild ein Zeitstempel zugeordnet werden. Somit kann die Zeit zwischen zwei Bildern durch Auswerten der Zeitstempel bestimmt werden. Auch kann die Bildfrequenz bekannt sein und die Dauer eines jeden Bildes aus der Bildfrequenz bestimmt werden. Damit kann dann auch die Zeit zwischen zwei Bildern bestimmt werden.

Insbesondere wird eine Periode einer vollständigen Umdrehung der Rotorblätter abhängig von der bestimmten Zeit und/oder der bestimmten Anzahl der Blattdurchgangsbilder ermittelt. Die Zeit oder die Anzahl der Bilder zwischen zwei Blattdurchgangsbildern multipliziert mit der Anzahl der Rotorblätter ergibt die Periode des Windrades. Auch diese Periode lässt sich für jede volle Umdrehung bestimmen und in einem Diagramm auftragen. Auch lassen sich in einem Diagramm die ermittelten Mittelwerte auftragen. In einem Nulldurchgang können lokale Maxima der Mittelwerte festgestellt werden. Mit jedem Nulldurchgang kann die Periode neu bestimmt werden, indem der Abstand oder die Zeit der Bilder zwischen dem aktuellen und dem vorherigen Blattdurchgangsbilder mit der Anzahl der Rotorblätter multipliziert wird.

Auch kann ein Bild bestimmt werden, in welchem das Rotorblatt eine Horizontalposition einnimmt. Dieses Bild kann ausgehend z.B. von einem Blattdurchgangsbild in Kenntnis der Periode bestimmt werden. Auch kann z.B. dasjenige Bild bestimmt werden, in dem eine Spitze des Rotorblatts einen maximalen Abstand (in der Bildebene) von der Blattwurzel, insbesondere der Drehachse der Windturbine hat. Auch kann z.B. das Bild bestimmt werden, in dem zwei Rotorblätter eine Symmetrieachse entlang der Turmachse haben. Dann sind die Rotorblätter z.B. in einer sogenannten Y Stellung.

Ausgehend von diesem Bild und insbesondere der Kenntnis der Periode oder Drehzahl kann das Bild mit der Horizontalposition bestimmt werden.

Wie erwähnt ist es möglich, dasjenige Bild zu bestimmen, in dem das Rotorblatt in einer nahezu Horizontalposition ist, z.B. ausgehend von einem Blattdurchgangsbild. Ein Rotorblatt befindet sich in einer Horizontalposition z.B. genau nach einem Viertel einer Periode nach dem Blattdurchgangsbild. Ist die Periode beispielsweise vier Sekunden, d.h. dreht sich das Rotorblatt in vier Sekunden genau einmal um die Achse des Triebstrangs, so befindet sich ein Rotorblatt, welches einen Nulldurchgang durchlaufen hat, genau nach einer Sekunde in einer ersten Horizontalposition. Dies ist die auf den Nulldurchgang folgende Horizontalposition, welche für die nachfolgende Betrachtung berücksichtigt werden kann. Bei einer Aufnahme mit fünfzig Bildern pro Sekunde könnte so das fünfzigste Bild nach dem Blattdurchgangsbild bestimmt werden, in welchem das Rotorblatt in einer Horizontalposition ist. Ein solches anhand der Periode bestimmtes Einzelbild kann als Messbild bestimmt werden. Auch kann das Bild in der zweiten Horizontalposition, die nach ¾ einer Periode ausgehend von dem Nulldurchgang erreicht wird, für die Auswertung als Messbild verwendet werden. Die Drehzahl und/oder Periode kann laufend ermittelt werden und so kann eine Bestimmung anhand einer aktuellen Drehzahl und/oder Periode erfolgen. Auch kann angenommen werden, dass eine Drehzahl und/oder Periode über einen Betrachtungszeitraum konstant ist. In dem Messbild nach 1/4 einer Periode ist das Rotorblatt in einer Horizontalposition von unten aufgenommen.

Auch kann eine Horizontalposition ausgehend von dem Bild mit der Y Stellung berechnet werden. Ein Rotorblatt kann z.B. in dem Bild in der ersten Horizontalposition sein, wenn ausgehend von dem Bild mit der Y Stellung das Bild ausgewählt wird, welches 1/12 der Periode vor dem Bild der Y Stellung erfasst wurde.

In der Horizontalposition eines Blattes kann z.B. der Abstand der Blattspitze von der Spinnerspitze bestimmt werden. Hierbei kann z.B. auch eine Abstand entlang der x-Achse und ein Abstand entlang der y-Achse der Blattspitze von der Spinnerspitze bestimmt werden. Wird dieser Abstand für jedes Blatt bestimmt, kann ein Unterschied zwischen den Blättern z.B. hinsichtlich ihrer Durchbiegung festgestellt. Dies erlaubt z.B. einen Rückschluss auf Materialverschleiß bei den jeweiligen Blättern und einen fehlerhaften Gierwinkel. Auch kann ein Winkel zwischen einer Achse senkrecht zur Symmetrieachse des Spinners und einer Achse durch die Spinnerspitze und die Blattspitze bestimmt werden. Dieser Winkel kann als Maß z.B. für eine Durchbiegung dienen.

Auch kann der Blattriss ausgewertet werden. Insbesondere ist es möglich, die Kantenerkennung auf den Blattriss auszudehnen. Anhand der erkannten Kante kann der Verlauf des Blattrisses erkannt werden. Hierbei verläuft die erkannt Kante in der Regel bogenförmig. Durch Auswertung des Bogen und vergleich der jeweiligen Blätter untereinander ist es möglich, das jeweilige dynamische Verhalten der Blätter zu vergleichen und ggf. Blattschäden zu detektieren. Auch kann basierend auf der erkannten Durchbiegung eine Notabschaltung initiiert werden.

Die erkannten Kanten können auch zusammen mit Wetterdaten ausgewertet werden. Insbesondere können Drehgeschwindigkeit, Durchbiegung, Schwingung und dergleichen in ein Verhältnis zu einer Windgeschwindigkeit, Temperatur, Windrichtung und/oder dergleichen gesetzt werden. Auch können zusammen mit den Daten der Kanten Betriebsdaten, insbesondere SCADA Daten der Windturbine ausgewertet werden. Zumindest können die Daten zusammen, einander zeitlich zugeordnet, gespeichert werden.

In dem Messbild kann insbesondere nach einer Kantenerkennung das Rotorblatt in seiner Vertikalprojektion ausgemessen werden. Die Kantenerkennung kann zumindest in Teilen entsprechend der oben beschriebenen Kantenerkennung erfolgen.

Insbesondere kann der auf die Bildebene projizierte Umriss des Rotorblatts ausgemessen werden. Hierbei ist es beispielsweise möglich, dass die zumindest lokal maximale Sehnenlänge des projizierten Bildes des Rotorblattes ermittelt wird. Dabei ist es möglich, die Anzahl der Pixel zu bestimmen, die entlang der Geraden der zumindest lokal maximal langen Sehne verlaufen.

Durch Definition einer Wegstrecke, die durch genau einen Pixel repräsentiert ist, lässt sich die tatsächliche projizierte Sehnenlänge bestimmen. Hierbei kann beispielsweise ein aus einem Datenblatt einer Windkraftanlage bestimmter Abstand in dem Bild markiert werden. Anschließend wird bestimmt, wie viele Pixel in diesem markierten Abstand liegen und jedem einzelnen Pixel kann anschließend ein tatsächliches Maß zugeordnet werden. Insbesondere kann beispielsweise die Breite der Gondel in dem Bild ausgemessen werden. Das Maß der tatsächlichen Breite der Gondel ist aus dem Datenblatt der Windkraftanlage ersichtlich. Anschließend kann jedem einzelnen Pixel ein Längenmaß zugeordnet werden. Dieses Längenmaß kann auf die Pixel der bestimmten Sehne angewandt werden und es lässt sich das tatsächliche Maß der Länge des projizierten Schenkels bestimmen. Durch trigonometrische Auswertung lässt sich anhand der bestimmten Sehnenlänge der Blattanstellwinkel eines Rotorblatts bestimmen. Es kann der Abstand x der Blattsehne (der breiteste Teil des Rotorblatts) von der Blattwurzel aus bekannt sein. Die Projektion der Blattsehen in die Kameraebene ermöglicht die Bestimmung der Länge der projizierten Blattsehne. Mit diesen Daten kann der Anstellwinkel berechnet werden

Ein Rotorblatt hat beispielsweise an seiner Aufhängung an der Gondel bzw. dem Spinner einen ersten inneren Radius. Der radiale Abstand vom Drehpunkt zu dem Ende des Rotorblatts kann ein zweiter Radius sein. Der Anstellwinkel $\alpha$ berechnet sich mit L als gemessener projizierten Sehnenlänge, R1 dem inneren Radius des Rotorblatts und R2 dem äußeren Radius des Rotorblatts zu

$$\alpha = \arcsin ( L - R1 / R2).$$

Die Bestimmung des Blattanstellwinkels kann für jedes Rotorblatt einzeln durchgeführt werden. Hierzu kann für jedes Rotorblatt ein Messbild bestimmt werden und anschließend die Vermessung der Sehnenlänge wie beschrieben erfolgen.

Anschließend kann der Blattanstellwinkel eines Rotorblatts mit den Blattanstellwinkeln der anderen Rotorblätter verglichen werden. Abweichungen können dazu verwendet werden, ein Alarmsignal, insbesondere an ein SCADA-System, auszugeben.

Auch ist es möglich, die gemessenen Blattanstellwinkel mit den von der Windkraftanlage gemeldeten, anhand von Sensoren gemessenen Blattanstellwinkel zu vergleichen. Hierdurch ist es möglich, die Sensoren der Windkraftanlage zu kalibrieren.

Nachfolgend wird der Gegenstand anhand einer Ausführungsbeispiele zeigenden Zeichnung näher erläutert. In der Zeichnung zeigen:

Fig. 1a     eine Seitenansicht einer Windkraftanlage;

Fig.1b     eine Frontansicht einer Windkraftanlage;

Fig. 2     ein erfasstes Bild einer Windkraftanlage;

Fig. 3a     ein Bildausschnitt einer Windkraftanlage mit durchgeführter Kantenerkennung;

Fig. 3b     ein Detail eines Bildausschnitts der Fig. 3a mit einer Helligkeitsverteilung an einer Kante;

Fig. 4a    ein Bild einer Windkraftanlage mit einem initialen Kennpunkt;

Fig. 4b    ein Bild einer Windkraftanlage, bei dem der Kennpunkt von dem initialen Kennpunkt verschoben ist;

Fig. 4c    ein Bild einer Windkraftanlage, bei dem der Kennpunkt von dem initialen Kennpunkt verschoben ist;

Fig. 5    ein zeitlicher Verlauf einer Verschiebung eines Kennpunkts in einer Richtung;

Fig. 6    ein Bild einer Windkraftanlage mit einem definierten Bildbereich;

Fig. 7    ein Bild einer Windkraftanlage, bei dem ein Rotorblatt einen Nulldurchgang hat;

Fig. 8    ein zeitlicher Verlauf eines Mittelwertes von Grauwerten in einem Bildbereich gemäß der Fig. 6;

Fig. 9    ein Bild einer Windkraftanlage mit Kantenerkennung und einer bestimmten zumindest lokal maximalen Sehnenlänge;

Fig. 10    ein Bild einer Windkraftanlage zur Veranschaulichung der Berechnung des Blattanstellwinkels;

Fig. 11    ein schematische Ansicht zur Bestimmung einer Rotation des Spinners.

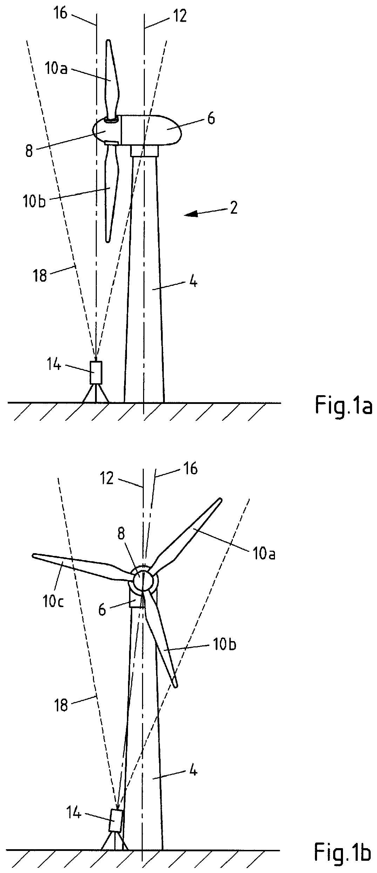

Fig. 1a zeigt eine Windkraftanlage 2, auch Windenergieanlage oder Windturbine genannt, mit einem Turm 4, einer Gondel 6, einem drehbar an der Gondel 6 aufgehängten Spinner 8 und an dem Spinner 8 angeordneten Rotorblättern 10a-c. Die Rotorebene der Rotorblätter 10a-c kann gegenüber der Turmachse 12 leicht geneigt sein. Ein Rotor kann zumindest eine Welle und die daran angeordneten Rotorblätter 10a-c umfassen. Der Rotor kann die Rotorblätter mit dem Generator verbinden und kann drehbar gelagert sein.

Der Turm 4 der Windkraftanlage 2 ist in der Regel mit einem Fundament (nicht dargestellt) am Boden befestigt. Die Turmachse 12 verläuft in der Regel im Wesentlichen senkrecht zum Boden. Vorzugsweise ist die Turmachse 12 durch den Turm 4 und die Gondel 6 verlaufend.

Für eine gegenständliche Bestimmung von Betriebsparametern der Windkraftanlage 2 werden Bilder vom Boden aus, insbesondere Bilder des Spinners 8 und der Rotorblätter 10a-c mit einer Kamera 14 erfasst. Die Kamera 14 kann dabei eine handelsübliche Videokamerasein, insbesondere eine digitale, vorzugsweise hochauflösende Videokamera. Die Kamera 14 wird am Turm 4 oder am Boden so befestigt, dass sie während der Aufnahme ortsfest ist und vorzugsweise nicht relevant schwingt. Die Kamera 14 wird so ausgerichtet, dass deren optische Achse 16 im Wesentlichen parallel zur Turmachse 12 verläuft. Das Blickfeld 18 der Kamera 14 ist so gewählt, dass die von der Kamera 14 erfassten Bilder zumindest Teile der Gondel 6, des Spinners 8 und der Rotorblätter 10a-c erfasst.

In der Fig. 1a ist zu erkennen, dass die Kamera 14 am Fuß des Turms 4 installiert ist und deren optische Achse 16 in Richtung der Gondel 6 bzw. des Spinners 8 gerichtet ist.

Das gegenständliche Verfahren ermöglicht eine Bestimmung von Parametern auch dann, wenn die optische Achse 16 nicht parallel zur Turmachse 12 verläuft, sondern in einem spitzen Winkel dazu, wie in der Fig. 1b dargestellt ist.

In der Fig. 1b ist die Windkraftanlage 2 gemäß der Fig. 1a dargestellt. Erneut ist eine Kamera 14 dargestellt, wobei diese jedoch versetzt zur Turmachse 12 am Fuß des Turms 4 aufgebaut ist. Die optische Achse 16 der Kamera 14 ist in diesem Fall leicht geneigt zur Turmachse 12. Es kann ausreichend sein, wenn das Blickfeld 18 der Kamera 14 derart ist, dass zumindest Teile der Gondel 6, des Spinners 8 als auch der Rotorblätter 10a-c erfasst werden.

Auch bei dem Beispiel gemäß Fig. 1a kann die optische Achse 16 der Kamera 14 leicht geneigt zur Turmachse 12 verlaufen. Vorzugsweise hat die optische Achse 16 einen spitzen Winkel zur Senkrechten.

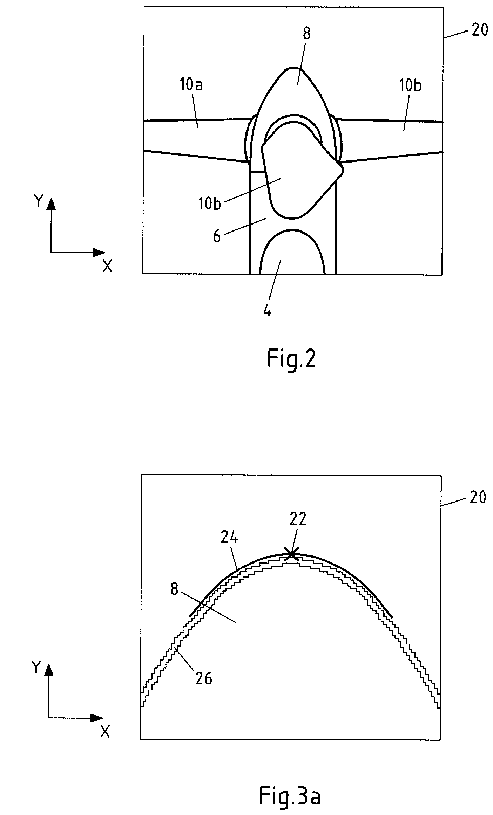

Fig. 2 zeigt ein Bild 20, welches von der Kamera 14 aufgenommen wurde. Die Kamera 14 erfasst vorzugsweise Bewegtbilder. Das Bild 20 ist ein Einzelbild aus einer Sequenz von Bewegtbildern.

Zur Bestimmung der Betriebsparameter werden Einzelbilder 20 der Bewegtbilder ausgewertet. In dem Bild 20 sind der Spinner 8, die Rotorblätter 10a-c sowie die Gondel 6 als auch ein Teil des Turmes 4 erfasst. Dies ist durch geeignete Wahl des Blickfelds 18 der Kamera 14, insbesondere durch Einstellung der Brennweite, und der optischen Achse 16 der Kamera 14 ermöglicht.

Zur Bestimmung von Betriebsparametern kann beispielsweise zunächst eine Schwingung des Turms 4 bestimmt und ggf. kompensiert werden. Hierzu ist es notwendig, die örtliche Verschiebung des Turms 4 über die Zeit zu ermitteln. Dies ist vorzugsweise dadurch möglich, dass ein markanter Punkt der Windkraftanlage 2 über die Zeit beobachtet wird und dessen örtliche Verschiebung insbesondere in den Einzelbildern der Sequenz, also auch dem Bild 20, in X- und Y-Richtung ermittelt wird. Hierzu kann beispielsweise durch einen Benutzer ein initialer Kennpunkt 22 in dem Bild 20 bestimmt werden.

Außerdem kann das Bild 20 einer Kantenerkennung unterzogen werden, so dass Kanten in dem Bild 20 in einem Weißton dargestellt werden und ebene Bereiche schwarz. Insbesondere kann das Bild in einen Frequenzbereich transformiert werden und anschließend die Ortsfrequenz der einzelnen Bildpunkte verwendet werden, um eine Kante zu bestimmen. Je schärfer eine Kante in dem Bild, desto höher ist dessen Ortsfrequenz. Zur weiteren Auswertung kann anschließend ein Weißwert abhängig von der Ortsfrequenz dem Bildpunkt zugeordnet werden.

In der Fig. 3a ist in einem Ausschnitt des Bildes 20 einer Kantenerkennung unterzogen worden. Zu erkennen ist, dass ein Kantenverlauf z.B. des Spinners 8 durch weiße Bildpunkte dargestellt ist.

Zur Kantenerkennung wird vorzugsweise eine Außenkante erkannt. Zur Kantenerkennung kann z.B. ausgehend vom Pixel des initialen Kennpunktes ein Farbwert, z.B. ein Grauwert von vertikal benachbarten Pixeln (also in einer Spalte angeordnete), in einem Abstand von n (n vorzugsweise <=6) vertikal benachbarten Pixeln bestimmt und ein Mittelwert hieraus berechnet werden. Anschließend werden die Farbwerte von Pixeln der Spalte des initialen Kennpunkts mit dem Mittelwert verglichen. Vorzugsweise der erste Pixel in dieser Spalte, dessen Farbwert über dem Mittelwert liegt, wird als Außenkante und somit Punkt für die zu approximierende Kurve erkannt. Ausgehend von diesem Pixel wird das beschriebene Verfahren für eine Anzahl an benachbarten Spalten, vorzugsweise in beide Richtungen, durchgeführt.

Dieser erfasste Kantenverlauf wird verwendet, um dadurch eine mathematisch bestimmte Kurve zu approximieren. Es wird diejenige Kurve bestimmt, welche dem Kantenverlauf 26 am nächsten kommt.

Für den Benutzer wird der errechnete Kurvenverlauf 24 auf das Bild 20 projiziert und es ist erkennbar, dass der berechnete Kurvenverlauf 24 in etwa dem Kantenverlauf 26 der Kantenerkennung entspricht.

Da der berechnete Kantenverlauf 24 einer mathematisch bestimmten Kurve folgt, kann deren Nullpunkt mathematisch bestimmt werden. Der initiale Kennpunkt 22 wird auf diesen Nullpunkt verschoben.

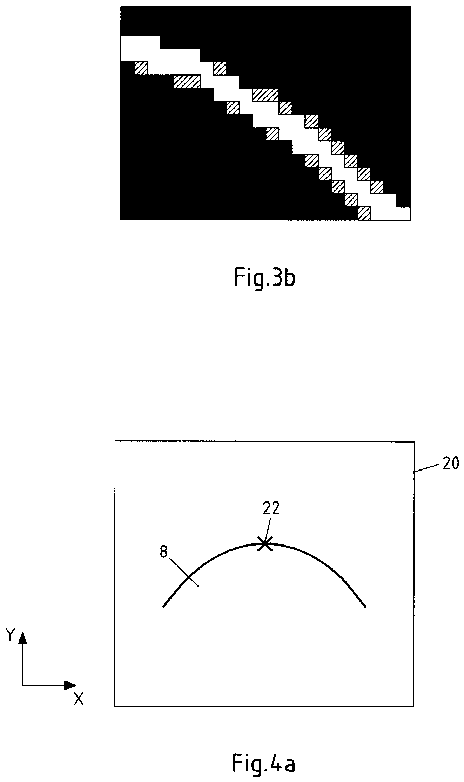

Fig. 3b zeigt beispielhaft einen Kantenverlauf nach durchgeführter Kantenerkennung. Zu erkennen ist, dass die Weißwerte um die erkannte Kante schwanken und der Weißwert mit zunehmender Entfernung von der erkannten Kante abflacht.

Die Kantenerkennung, wie sie für die Fig. 3a beschrieben wurde, kann für jedes Einzelbild durchgeführt werden. Der initiale Kennpunkt 22 ist bekannt. Da die Position der Kamera relativ zum Sockel des Turmes 4 ortsfest ist, bleibt der initiale Kennpunkt 22 in dem Bildausschnitt des Bildes 20 stets an der gleichen Stelle.

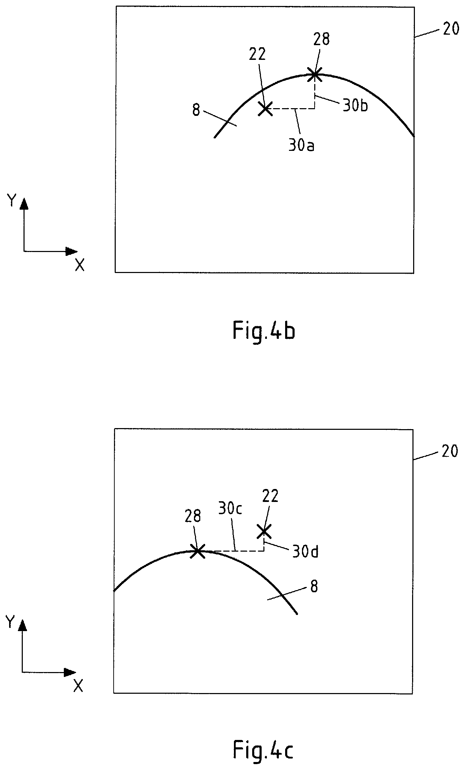

Fig. 4a zeigt das Bild 20, in dem der initiale Kennpunkt 22 bestimmt wurde. In einem darauffolgenden Bild, wie es beispielsweise in Fig. 4b dargestellt ist, ist der Spinner 8 nach rechts und nach oben verschoben. Mit Hilfe der Erkennung des Kennpunktes, wie im Zusammenhang mit der Fig. 3 beschrieben, wird ein aktueller Kennpunkt 28 des Spinners 8 ermittelt. Auch hier kommt wieder Kantenerkennung und Kurvenapproximation zum Einsatz. Anschließend kann die örtliche Verschiebung des aktuellen Kennpunkts 28 vom initialen Kennpunkt 22 bestimmt werden. Der in der Fig. 4b dargestellte Spinner 8 hat eine Verschiebung 30a in X-Richtung und eine Verschiebung 30b in Y-Richtung.

Ein weiteres Bild 20 ist in der Fig. 4c dargestellt. In diesem Bild 20 ist der aktuelle Kennpunkt 28 um eine Entfernung 30c in X-Richtung und 30d in Y-Richtung von dem initialen Kennpunkt 22 verschoben.

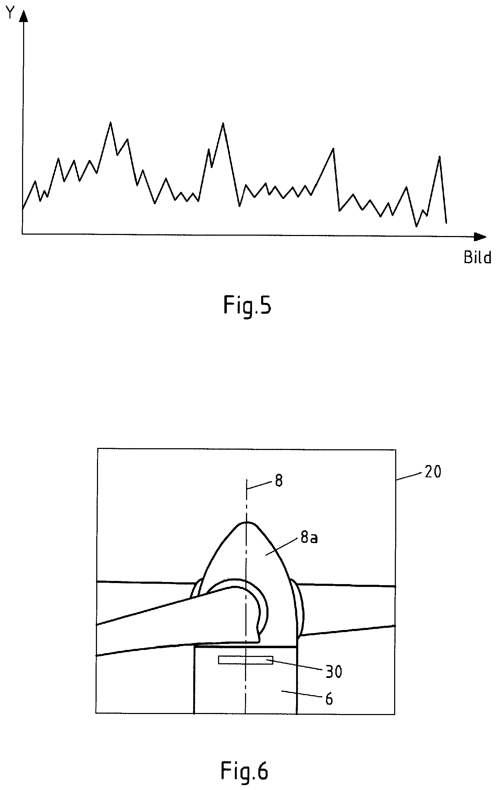

Die Verschiebung der aktuellen Kennpunkte 28 von dem initialen Kennpunkt 22 kann für alle Bilder einer Sequenz von Bildern bestimmt werden. Anschließend ist es möglich, wie in der Fig. 5 dargestellt, die Verschiebung des aktuellen Kennpunkts 28 sowohl in X-Richtung als auch in Y-Richtung jeweils über die Einzelbilder aufzutragen. Fig. 5 zeigt einen beispielhaften Verlauf der Verschiebung des aktuellen Kennpunkts 28 von dem initialen Kennpunkt 22 in Y-Richtung. Dasselbe kann für die X-Richtung erfolgen. An dem Verlauf lässt sich erkennen, dass zu bestimmten Zeiten der aktuelle Kennpunkt weit über den Durchschnitt der Verschiebung in Y-Richtung abweicht. Dies kann bereits ein Hinweis darauf sein, dass die Windkraftanlage nicht optimal betrieben wird.

Um die Auswertung weiter zu verfeinern und weitere Betriebsparameter ermitteln zu können, kann die Verschiebung des aktuellen Kennpunkts 28 von dem initialen Kennpunkt 22 für jedes Einzelbild kompensiert werden. Hierzu werden die Positionen aller Pixel eines Bilds 20 um die zuvor bestimmte Verschiebung des Kennpunkts in X-Richtung und die zuvor bestimmte Verschiebung des Kennpunkts in Y-Richtung kompensiert. Das bedeutet, dass die Pixel des Bilds 20 gemäß der Fig. 4b um die Länge 30b in Y-Richtung nach unten verschoben werden und um die Länge 30a in X-Richtung nach links verschoben werden. Dann liegt der initiale Kennpunkt 22 auf dem aktuellen Kennpunkt 28. Bei dieser Betrachtung wird davon ausgegangen, dass die Ausrichtung der Drehachse konstant ist. Kommt es aufgrund einer Änderung der Windrichtung zu einer Veränderung der Drehachse (Gierwinkel), kann dies z.B. dadurch erkannt werden, dass sich die Kurvenparameter der approximierten Kante verändern. Eine Veränderung der Kurvenparameter kann z.B. ausgewertet werden, um eine Veränderung des Gierwinkels zu detektieren. Eine solche Veränderung kann ebenfalls kompensiert werden, in dem z.B. zunächst die approximierte Kurve hinsichtlich der Kurvenparameter verändert wird, die durch die Veränderung des Gierwinkels eingetreten sind. Es wird also eine Kurve angenommen, die bestimmt worden wäre, hätte es keine Veränderung des Gierwinkels gegeben. Ausgehend von dieser Kurve kann anschließend die beschriebene Verschiebung des Kennpunktes erfolgen. Die Reihenfolge der Kompensation kann auch umgekehrt sein.

Dasselbe gilt für das Bild 20 gemäß der Fig. 4c. Hier werden beispielsweise alle Pixel um den Abstand 30c nach rechts in X-Richtung verschoben und um den Abstand 30d nach oben in Y-Richtung. Auch hierdurch wird der aktuelle Kennpunkt 28 mit dem initialen Kennpunkt 22 in örtliche Übereinstimmung gebracht. Alle so verschobenen Bilder werden erneut abgespeichert und können für eine nachfolgende Analyse verwendet werden.

Der Bildverlauf der Einzelbilder 20 ist nun frei von Bewegungen des Turms und/oder der Gondel und/oder des Spinners 8, welche durch Unwuchten oder Wind verursacht sind. Die Relativbewegung des Kennpunktes zur Position der Kamera ist kompensiert. Die Position des Spinners 8 ist in allen Bildern einer Sequenz identisch.

Mit einer so bewegungskompensierten Abfolge von Einzelbildern ist es möglich, die Periode des Rotors zu bestimmen. Hierzu kann z.B. manuell ein Bildbereich 30 bestimmt werden, wie in der Fig. 6 dargestellt. Vorzugsweise ist der Bildbereich 30 überlappend mit der Mittelachse 8a des Spinners 8 und liegt vorzugsweise im Bereich der Gondel 6 bzw. des Turms 4, wie er in dem Bild 20 zu erkennen ist. Vorzugsweise ist der Bildbereich 30 so gewählt, dass jedes einzelne Rotorblatt 10a-c den Bildbereich in einem Nulldurchgang kreuzt. Ein Nulldurchgang eines Rotorblatts 10a-c kann beispielsweise so definiert sein, dass die Längsachse eines Rotorblatts 10a-c einen kleinsten Winkel zu der Turmachse 12 ausbildet, vorzugsweise parallel zu der Turmachse 12 verläuft. Ferner weist eine Spitze dieses Rotorblatts in diesem Moment Richtung Boden bzw. Turm.

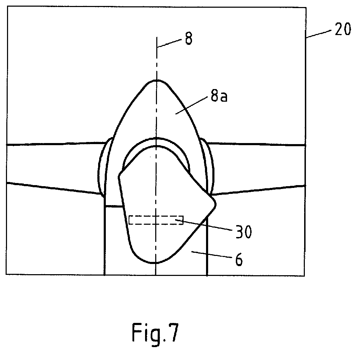

Anschließend kann jedes Einzelbild hinsichtlich eines Mittelwertes eines Farbwertes, insbesondere des Grauwertes aller Pixel in dem Bildbereich 30 ausgewertet werden. Vorzugsweise variiert der Mittelwert des Bildbereichs 30 dann, wenn eines der Rotorblätter 10a-c einen Nulldurchgang hat. Ein solcher Nulldurchgang ist beispielhaft in der Fig. 7 dargestellt. Zu erkennen ist, dass in dem Moment, in dem das Rotorblatt 10a-c den Bildbereich 30 kreuzt, die Helligkeit der Pixel in dem Bildbereich 30 größer wird. Dies liegt an der erhöhten Reflektion des Umgebungslichtes durch das Rotorblatt 10a-c gegenüber der Reflektion des Umgebungslichts durch die Unterseite der Gondel 6 bzw. des Turms 4.

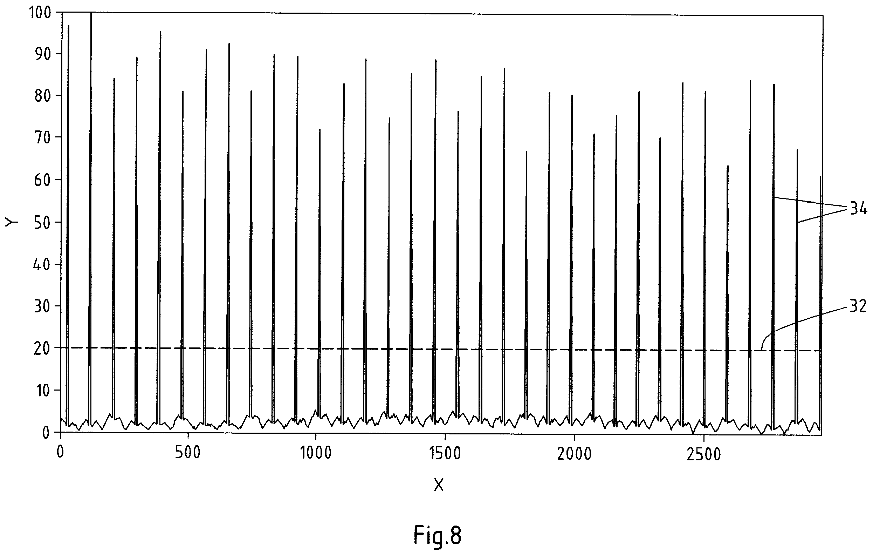

Der Mittelwert 34 wird für alle Einzelbilder, wie in der Fig. 8 dargestellt, berechnet, erfasst und vorzugsweise auch aufgetragen. Zu erkennen ist, dass der Mittelwert 34 in einem nahezu regelmäßigen Abstand stark von dessen Median abweicht.

Es kann ein Grenzwert 32 bestimmt werden. Der Mittelwert 34 wird für jedes Einzelbild mit dem Grenzwert 32 verglichen. Überschreitet der Mittelwert 34 den Grenzwert 32, so kann darauf geschlossen werden, dass dieses Bild dasjenige Bild ist, zu dem ein Rotorblatt 10a-c einen Nulldurchgang hat. In der Fig. 8 ist jedes Blattdurchgangsbild durch eine Spitze des Mittelwertes 34 repräsentiert.

Anhand der Auswertung der Mittelwerte 34 und des Vergleichs mit dem Grenzwert 32, werden diejenigen Bilder bestimmt, die mit hoher Wahrscheinlichkeit Nulldurchgänge repräsentieren. Diese können als Blattdurchgangsbilder dem Benutzer angezeigt werden. Der Benutzer kann bestätigen, dass das ermittelte Bild tatsächlich ein Blattdurchgangsbild ist. Außerdem kann dem Benutzer ermöglicht werden, in der Bildsequenz zeitlich benachbart vorhergehende oder nachfolgende Bilder des ermittelten Bildes anzuschauen und zu entscheiden, ob das ermittelte Bild tatsächlich das Blattdurchgangsbild ist oder ob ein zeitlich davor oder dahinter liegendes Bild, insbesondere ein oder zwei Bilder zuvor oder danach, den Blattdurchgang besser repräsentieren. In diesem Fall kann der Benutzer die automatische Bestimmung überregeln und manuell Blattdurchgangsbilder bestimmen.

Nachdem die Blattdurchgangsbilder bestimmt wurden, kann der Abstand zwischen den Blattdurchgangsbildern in zeitlicher Hinsicht bestimmt werden. Hierbei ist es beispielsweise möglich, die Zeit oder die Anzahl der Einzelbilder zwischen zwei Blattdurchgangsbildern zu bestimmen. Mit Hilfe dieser Zeit ist es möglich, die Periode der Rotation des Spinners 8 zu bestimmen. Hierzu ist es lediglich notwendig, die Anzahl der Rotorblätter 10a-c zu kennen. Der Abstand zwischen zwei Blattdurchgangsbildern multipliziert mit der Anzahl der Rotorblätter ergibt die Periode des Spinners 8, d.h. die Dauer, die der Rotor benötigt, um eine vollständige Umdrehung durchzuführen.

Vorzugsweise wird jeweils die aktuell bestimmte Periode verwendet, um nachfolgend dasjenige Bild zu bestimmen, zu dem das Rotorblatt 10a-c, welches den Nulldurchgang hatte, in einer Horizontalposition ist. Ausgehend von dem erfassten Nulldurchgang dreht sich der Spinner genau um eine Viertel Drehung, bis dasjenige Rotorblatt, was gerade den Nulldurchgang durchlaufen hat, in einer nahezu horizontalen Position ist. Ein Viertel der Zeit bzw. der Anzahl der Bilder in einer aktuellen Periode entspricht der Zeit oder der Anzahl der Bilder, bis das Rotorblatt in einer Horizontalposition ist.

Dieses Rotorblatt ist bei ¾ der Periode erneut in einer Horizontalposition. Es hat sich jedoch herausgestellt, dass die Bestimmung des Blattanstellwinkels dann besonders einfach ist, wenn die Hinterkante eines Rotorblatts 10a-c betrachtet wird. Diese Hinterkante lässt sich dann betrachten, wenn das Rotorblatt 10a-c ausgehend von dem Nulldurchgang eine Viertel Drehung durchgeführt hat.

Nachdem die Zeit oder die Anzahl der Bilder bestimmt wurde, die das Rotorblatt benötigt, um in die Horizontalposition zu gelangen, wird dasjenige Bild ermittelt, welches entsprechend der Zeit oder die Anzahl der Bilder von dem Durchgangsbild entfernt ist.

Dieses dann ermittelte Bild wird derart ausgewertet, dass eine maximale Sehnenlänge eines Rotorblatts ermittelt wird. Hierzu kann erneut eine Kantenerkennung des Bildes verwendet werden.

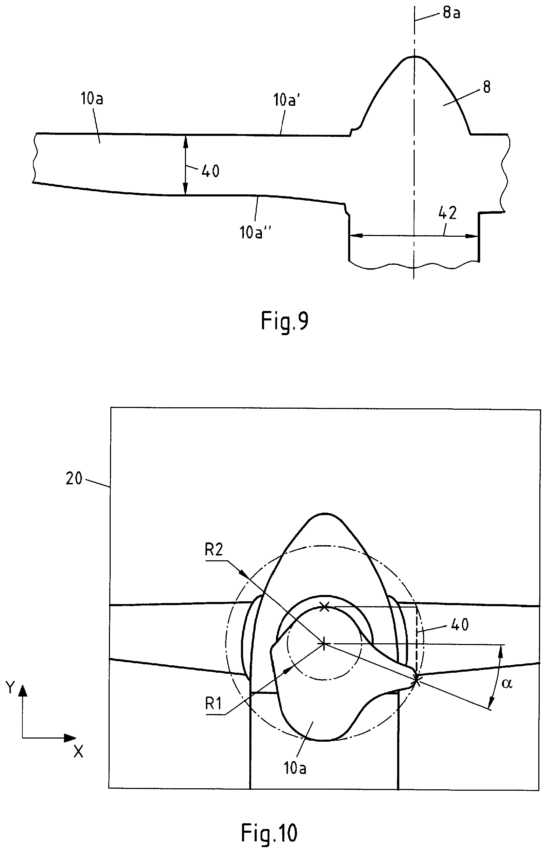

Ausgehend von dem Spinner 8 werden in X-Richtung die Sehnenlängen der Projektion des Rotorblatts auf die Bildebene ausgewertet und die zumindest lokal maximale Sehnenlänge bestimmt. Dies ist in der Fig. 9 dargestellt. Zu erkennen ist, dass ausgehend von dem Spinner 8 bzw. der Spinnerachse 8a in X-Richtung der Abstand zwischen einer oberen Rotorblattkante 10a' und einer unteren Rotorblattkante 10a" variiert. Die maximale Sehnenlänge 40 wird ermittelt. Diese maximale Sehnenlänge 40 entspricht der Projektion der maximalen Blattsehne des Rotorblatts 10a in die Bildebene.

Mit Hilfe der so ermittelten Projektion der Blattsehne in die Bildebene und der Länge der Sehne ist es möglich, den Blattanstellwinkel zu berechnen.

Hierzu werden zunächst die Anzahl der Pixel ermittelt, die der bestimmten maximalen Sehnenlänge 40 entspricht. Anschließend wird eine Referenzentfernung in dem Bild 20 bestimmt, beispielsweise ein Durchmesser 42 des Spinners 8. Dieser Durchmesser 42 des Spinners 8 hat ebenfalls eine Anzahl an Pixeln. Aus dem Datenblatt der Windkraftanlage 2 lässt sich der Anzahl an Pixeln des Durchmessers 42 eine Maß einer Länge zuordnen. Hiermit kann jedem einzelnen Pixel ein tatsächliches Maß zugeordnet werden. Mit Hilfe der Anzahl der Pixel für die Sehnenlänge 40 und dem einem einzelnen Pixel zugeordneten Maß ist es möglich, das tatsächliche Maß der Sehnenlänge 40 zu bestimmen.

Anschließend wird, wie in der Fig. 10 dargestellt ist, aus dem so ermittelten Maß (L) der Sehnenlänge 40 der Blattanstellwinkel α ermittelt. Aus dem Datenblatt der Windkraftanlage ist der innere Radius R1 des Rotorblatts 10a bekannt. Ferner ist der äußere Radius R2 des Rotorblatts 10a bekannt. Zusammen mit dem Maß der Sehnenlänge 40, lässt sich der Blattanstellwinkel α aus

$$\alpha = \arcsin (L - R1 / R2)$$

bestimmen.

Der Blattanstellwinkel α kann anschließend für jedes der Rotorblätter 10a-c bestimmt werden, indem für jedes der Rotorblätter das Bild der Horizontalposition bestimmt wird und in diesen Bildern die Sehnenlängen bestimmt werden. Anschließend können die ermittelten Blattanstellwinkel der einzelnen Rotorblätter miteinander verglichen werden. In der Regel müssten die Blattanstellwinkel α aller Rotorblätter 10a-c unter Duldung einer Toleranz in etwa gleich groß sein. Ergibt sich eine Abweichung eines Blattanstellwinkels α eines der Rotorblätter 10a von den anderen Rotorblättern 10b-c, kann eine Fehleinstellung der Windkraftanlage vorliegen. Dies kann z.B. daraus resultieren, dass der Sensor der Windkraftanlage 2, welcher den Blattanstellwinkel α der Windkraftanlage 2 bzw. dessen SCADA meldet, defekt oder fehlkalibriert ist. Durch eine Nachjustage ist es möglich, die Blattanstellwinkel α aller Rotorblätter 10a-c möglichst gleich einzustellen, um die Rotation des Spinners 8 auszuwuchten.

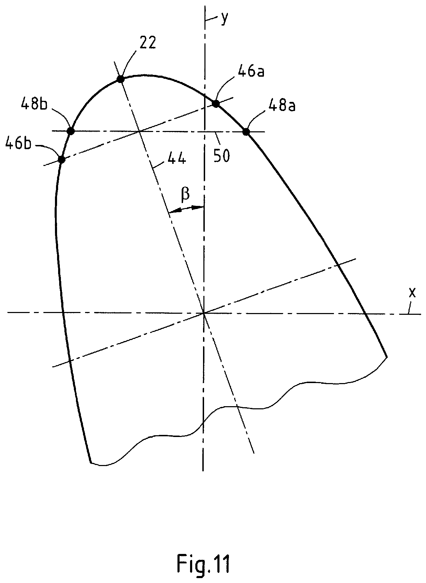

Fig. 11 zeigt einen Bildausschnitt eines Bildes des Spinners 8. Eingezeichnet sind die vertikale Bildachse y und horizontale Bildachse x.

Ferner ist eine Symmetrieachse 44 durch den Spinner 8 gezeigt. Zu erkennen ist, dass die Symmetrieachse 44 gegenüber der vertikalen Bildachse y um den Winkel β geneigt.

Um nun diesen Winkel bestimmten zu können, sind verschiedene Methoden denkbar. Gezeigt ist eine denkbare Variante. Hierbei wird zunächst ausgehend von der Spinnerspitze, repräsentiert durch den Kennpunkt 22 beidseitig jeweils ein Punkt 46a,b bestimmt, der entlang der Kurve 24 einen gleichen Abstand von dem Kennpunkt hat.

Anschließend wird ermittelt, welchen Abstand der jeweilige Punkt 46a, b von einem Punkt 48a, b bei einem Schnitt der Kurve 24 mit einer Horizontalen 50 hat. Dieser Abstand ist ein Maß für die Rotation des Spinners 8 gegenüber der vertikalen Bildachse y um den Winkel β.

**Patentansprüche**

1. Verfahren zum Bestimmen eines Betriebsparameters einer Windkraftanlage umfassend:

   - Aufnehmen einer Sequenz von Bildern (20) der Windkraftanlage (2), insbesondere während des Produktionsbetriebs der Windkraftanlage (2), wobei die Bilder (20) von unterhalb einer Gondel (6) der Windkraftanlage (2) aufgenommen werden und eine optische Achse (16) der Bilderfassung parallel oder in einem spitzen Winkel zur einer Turmachse der Windkraftanlage (2) verläuft, und
   - Bestimmen des Betriebsparameters anhand der aufgenommenen Bilder,
   **dadurch gekennzeichnet,**
   **dass** in einem der Bilder (20) ein initialer erster Kennpunkt (22) bestimmt wird, wobei der initiale erste Kennpunkt (22) ein Bildpunkt der Windkraftanlage (2) ist, dessen Bildposition sich durch die Rotation von Rotorblättern der Windkraftanlage (2) zwischen zwei der Bilder (20) nicht verändert,
   - **dass** in dem Bild (20) eine Kantenerkennung durchgeführt wird,
   - **dass** eine Kurve durch die erkannte Kante approximiert wird und so eine approximierte Kurve (24) bestimmt wird,
   - **dass** in der approximierten Kurve (24) ein zweiter Kennpunkt bestimmt wird, wobei der zweite Kennpunkt ein Punkt der approximierten Kurve ist, der dem initialen ersten Kennpunkt (22) am nächsten liegt oder dass der zweite Kennpunkt ein Nullpunkt der approximierten Kurve (24) ist,
   - **dass** der initiale erste Kennpunkt (22) zu dem zweiten Kennpunkt verschoben wird und
   - **dass** in zeitlich aufeinanderfolgenden Bildern ein weiterer Kennpunkt (28) bestimmt wird und dass eine räumliche Position des weiteren Kennpunkts (28) mit der räumlichen Position des verschobenen initialen ersten Kennpunktes (22) verglichen wird und dass eine räumliche Abweichung des weiteren Kennpunktes (28) von dem verschobenen initialen ersten Kennpunkt (22) ermittelt wird, wobei die räumliche Abweichung den Betriebsparameter repräsentiert, wobei der Betriebsparameter die Auslenkung des Turms und/oder der Gondel ist.

2. Verfahren nach Anspruch 1,
**dadurch gekennzeichnet,**
**dass** im Sichtfeld der Bilderfassung zumindest Teile der Windkraftanlage (2), deren Position im Wesentlichen unabhängig von der Rotation eines Rotors ist, insbesondere Teile des Spinners (8) und/oder der Gondel (6) und zumindest Teile zumindest eines Rotorblatts der Windkraftanlage (2), erfasst werden, insbesondere dass im Sichtfeld der Bilderfassung zumindest eine Spinnerspitze des Spinners (8) erfasst wird.

3. Verfahren nach Anspruch 1 oder 2,
**dadurch gekennzeichnet,**
**dass** Bewegtbilder der Windkraftanlage (2) erfasst werden und/oder dass von den erfassten Bildern Einzelbilder ausgewertet werden.

4. Verfahren nach Anspruch 1,
**dadurch gekennzeichnet,**
**dass** die approximierte Kurve (24) ein Verlauf eines Kegelschnitts ist.

5. Verfahren nach einem der vorangehenden Ansprüche,
**dadurch gekennzeichnet,**
**dass** eines der Bilder (20) abhängig von der ermittelten Abweichung des weiteren Kennpunktes (28) derart verschoben wird, dass die Abweichung im Wesentlichen kompensiert wird.

6. Verfahren nach einem der vorangehenden Ansprüche,
**dadurch gekennzeichnet,**
**dass** ein Bildausschnitt bestimmt wird, dass ein Farbwert, insbesondere ein Grauwert des Bildausschnitts, insbesondere ein mittlerer Farbwert des Bildausschnitts bestimmt wird und dass diejenigen Bilder (20) ermittelt werden, in denen der Farbwert einen Grenzwert überschreitet und als Blattdurchgangsbilder bestimmt werden.

7. Verfahren nach Anspruch 6,
**dadurch gekennzeichnet,**
**dass** der Bildausschnitt in einem Bereich zwischen dem Spinner (8) und dem Turm der Windkraftanlage (2) bestimmt wird.

8. Verfahren nach einem der Ansprüche 6 oder 7,
**dadurch gekennzeichnet,**
**dass** die Zeit und/oder die Anzahl der Bilder (20) bestimmt wird, die zwischen jeweils zwei Blattdurchgangsbildern liegen.

9. Verfahren nach Anspruch 8,
**dadurch gekennzeichnet,**
**dass** eine Periode einer vollständigen Umdrehung der Rotorblätter abhängig von der bestimmten Zeit und/oder der bestimmten Anzahl der Bilder (20) ermittelt wird, wobei die Periode insbesondere N mal der bestimmten Zeit und/oder der bestimmten Anzahl der Bilder (20), mit N entsprechend der Anzahl an Rotorblättern, bestimmt wird.

10. Verfahren nach Anspruch 9,
**dadurch gekennzeichnet,**
**dass** in Abhängigkeit der Periode eine Zeit und/oder eine Anzahl von Bildern (20) bestimmt wird, in der ein Rotorblatt eine Viertelumdrehung durchgeführt hat und dass hiermit ein Messbild bestimmt wird.

11. Verfahren nach Anspruch 10,
**dadurch gekennzeichnet,**
**dass** in dem Messbild eine maximale Sehnenlänge eines erfassten Rotorblatts ermittelt wird.

12. Verfahren nach Anspruch 11,
**dadurch gekennzeichnet,**
**dass** aus der ermittelten Sehnenlänge der Blattanstellwinkel des Rotorblatts bestimmt wird.

13. Verfahren nach Anspruch 12,
**dadurch gekennzeichnet,**
**dass** für jedes Rotorblatt der Windkraftanlage (2) der Blattanstellwinkel bestimmt wird und/oder dass die bestimmten Blattanstellwinkel der Rotorblätter miteinander verglichen werden und/oder dass bei einer Abweichung der Blattanstellwinkel zweier Rotorblätter größer als ein Grenzwert ein Fehlersignal ausgegeben wird und/oder dass bei einer Abweichung der Blattanstellwinkel zweier Rotorblätter größer als ein Grenzwert eine Wartung der Windkraftanlage veranlasst wird.

**Claims**

1. Method for determining an operating parameter of a wind power plant comprising:

   - acquiring a sequence of images (20) of the wind turbine (2), in particular during production operation of the wind turbine (2), wherein the images (20) are acquired from below a nacelle (6) of the wind turbine (2) and an optical axis (16) of the image acquisition is parallel or at an acute angle to a tower axis of the wind turbine (2), and
- determining the operating parameter on the basis of the acquired images, **characterized in that** an initial first characteristic point (22) is determined in one of the images (20), the initial first characteristic point (22) being a pixel of the wind turbine (2) whose image position does not change due to the rotation of rotor blades of the wind turbine (2) between two of the images (20),
- **that** edge detection is performed in the image (20),
- **that** a curve is approximated by the detected edge and thus an approximated curve (24) is determined,
- **that** a second characteristic point is determined in the approximated curve (24), the second characteristic point being a point of the approximated curve which is closest to the initial first characteristic point (22), or in that the second characteristic point is a zero point of the approximated curve (24),
- **that** the initial first characteristic point (22) is shifted to the second characteristic point and
- **that** in temporally successive images a further characteristic point (28) is determined, and in that a spatial position of the further characteristic point (28) is compared with the spatial position of the shifted initial first characteristic point (22), and that a spatial deviation of the further characteristic point (28) from the shifted initial first characteristic point (22) is determined, the spatial deviation representing the operating parameter, the operating parameter being the deflection of the tower and/or of the nacelle.

2. Method according to claim 1, **characterized in that** at least parts of the wind turbine (2) whose position is substantially independent of the rotation of a rotor, in particular parts of the spinner (8) and/or the nacelle (6) and at least parts of at least one rotor blade of the wind turbine (2), are detected in the field of view of the image acquisition, in particular that at least one spinner tip of the spinner (8) is detected in the field of view of the image acquisition.

3. Method according to claim 1 or 2, **characterized in that** moving images of the wind turbine (2) are acquired and/or in that individual images of the acquired images are evaluated.

4. Method according to claim 1, **characterized in that** the approximated curve (24) is a course of a conical section.

5. Method according to one of the preceding claims, **characterized in that** one of the images (20) is shifted depending on the determined deviation of the further characteristic point (28) in such a way that the deviation is substantially compensated.

6. Method according to one of the preceding claims, **characterized in that** an image section is determined, that a color value, in particular a gray value of the image section, in particular a mean color value of the image section is determined, and that those images (20) are determined in which the color value exceeds a limit value and are determined as blade passage images.

7. Method according to claim 6, **characterized in** the image section is determined in an area between the spinner (8) and the tower of the wind turbine (2).

8. Method according to one of claims 6 or 7, **characterized in** the time and/or the number of images (20) is determined which lie between each two blade passage images.

9. Method according to claim 8, **characterized in that** a period of a complete rotation of the rotor blades is determined depending on the determined time and/or the determined number of images (20), wherein the period is determined in particular N times the determined time and/or the determined number of images (20), with N corresponding to the number of rotor blades.

10. Method according to claim 9, **characterized in that**, as a function of the period, a time and/or a number of images (20) is determined in which a rotor blade has performed a quarter turn, and in that a measurement image is determined therewith.

11. Method according to claim 10, **characterized in that** a maximum chord length of a detected rotor blade is determined in the measurement image.

12. Method according to claim 11, **characterized in that** the blade pitch angle of the rotor blade is determined from the determined chord length.

13. Method according to claim 12, **characterized in that** the blade pitch angle is determined for each rotor blade of the wind turbine (2) and/or **in that** the determined blade pitch angles of the rotor blades are compared with one another and/or **in that**, in the event of a deviation of the blade pitch angles of two rotor blades greater than a limit value, an error signal is output and/or **in that**, in the event of a deviation of the blade pitch angles of two rotor blades greater than a limit value, maintenance of the wind turbine is initiated.

## Revendications

1. Procédé pour déterminer un paramètre de fonctionnement d'une éolienne comprenant :

   - prendre une séquence d'images (20) de l'éolienne (2), en particulier pendant le fonctionnement de production de l'éolienne (2), où les images (20) sont prises depuis le dessous d'une nacelle (6) de l'éolienne (2) et un axe optique (16) de la prise d'images est parallèle ou forme un angle aigu avec un axe de tour de l'éolienne (2), et
   - déterminer le paramètre de fonctionnement à partir des images capturées,
   **caractérisé en ce**
   **qu'**un premier point caractéristique initial (22) est déterminé dans l'une des images (20), où le premier point caractéristique initial (22) est un point d'image de l'éolienne (2) dont la position d'image ne change pas par la rotation de pales de rotor de l'éolienne (2) entre deux des images (20),
   - **qu'**une détection de contour est effectuée dans l'image (20),
   - **qu'**une courbe est approximée par le contour détecté et qu'une courbe approximée (24) est ainsi déterminée,
   - **qu'**un deuxième point caractéristique est déterminé dans la courbe approximée (24), où le deuxième point caractéristique est un point de la courbe approximée qui est le plus proche du premier point caractéristique initial (22) ou que le deuxième point caractéristique est un point zéro de la courbe approximée (24),
   - **que** le premier point caractéristique initial (22) est déplacé vers le deuxième point caractéristique et
   - **qu'**un autre point caractéristique (28) est déterminé dans des images successives dans le temps et qu'une position spatiale de l'autre point caractéristique (28) est comparée à la position spatiale du premier point caractéristique initial déplacé (22) et qu'un écart spatial de l'autre point caractéristique (28) par rapport au premier point caractéristique initial déplacé (22) est déterminé, où l'écart spatial représente le paramètre de fonctionnement, où le paramètre de fonctionnement est la déflexion de la tour et/ou de la nacelle.

2. Procédé selon la revendication 1,
   **caractérisé en ce**
   **qu'**au moins des parties de l'éolienne (2) dont la position est essentiellement indépendante de la rotation d'un rotor, en particulier des parties du spinner (8) et/ou de la nacelle (6) et au moins des parties d'au moins une pale de rotor de l'éolienne (2), sont détectées dans le champ de vision de la détection d'image, en particulier qu'au moins une pointe de spinner du spinner (8) est détectée dans le champ de vision de la détection d'image.

3. Procédé selon la revendication 1 ou 2,
   **caractérisé en ce**
   **que** des images animés de l'éolienne (2) sont saisies et/ou que parmi des images saisies, des images individuelles sont évaluées.

4. Procédé selon la revendication 1,
   **caractérisé en ce**
   **que** la courbe approximée (24) est un tracé d'une section conique.

5. Procédé selon l'une des revendications précédentes,
   **caractérisé en ce**
   **que** l'une des images (20) est déplacée en fonction de l'écart déterminé de l'autre point caractéristique (28) de telle sorte que l'écart est essentiellement compensé.

6. Procédé selon l'une des revendications précédentes,
   **caractérisé en ce**
   **qu'**une section d'image est déterminée, qu'une valeur de couleur, en particulier une valeur de gris de la section d'image, en particulier une valeur de couleur moyenne de la section d'image est déterminée et que les images (20) dans lesquelles la valeur de couleur dépasse une valeur limite sont déterminées et sont déterminées comme images de passage de pale.

7. Procédé selon la revendication 6,
   **caractérisé en ce**
   **que** la section d'image est déterminée dans une zone située entre le spinner (8) et la tour de l'éolienne (2).

8. Procédé selon l'une des revendications 6 ou 7,
   **caractérisé en ce**
   **que** le temps et/ou le nombre d'images (20) est déterminé qui s'écoulent entre deux images de passage de pale respectives.

**9.** Procédé selon la revendication 8, **caractérisé en ce qu'**une période de rotation complète des pales de rotor est déterminée en fonction du temps déterminé et/ou du nombre déterminé d'images (20), où la période est en particulier déterminée N fois le temps déterminé et/ou le nombre déterminé d'images (20), avec N correspondant au nombre de pales.

**10.** Procédé selon la revendication 9, **caractérisé en ce que** un temps et/ou un nombre d'images (20) pendant lesquels une pale de rotor a effectué un quart de tour est déterminé en fonction de la période, et que ainsi une image de mesure est déterminé.

**11.** Procédé selon la revendication 10, **caractérisé en ce, qu'**une longueur de corde maximale d'une pale de rotor détectée est déterminée dans l'image de mesure.

**12.** Procédé selon la revendication 11, **caractérisé en ce que** l'angle d'attaque de la pale de rotor est déterminé à partir de la longueur de corde déterminée.

**13.** Procédé selon la revendication 12, **caractérisé en ce que** l'angle d'attaque des pales est déterminé pour chaque pale de rotor de l'éolienne (2) et/ou que les angles d'attaque des pales de rotor déterminés sont comparés entre eux et/ou que, en cas d'écart des angles d'attaque de deux pales de rotor supérieur à une valeur limite, un signal d'erreur est émis et/ou que, en cas d'écart des angles d'attaque de deux pales de rotor supérieur à une valeur limite, un entretien de l'éolienne est ordonné.

Fig.1a

Fig.1b

Fig.2

Fig.3a

Fig.3b

Fig.4a

Fig.4b

Fig.4c

Fig.5

Fig.6

Fig.7

Fig.8

Fig.9

Fig.10

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013110898 A1
- EP 2369176 A1
- DE 102008031484 A1
- FR 2882404
- DE 102008053928 A1